# EUROPEAN PATENT SPECIFICATION

(11) **EP 4 499 996 B1**
(45) Date of publication and mention of the grant of the patent: **15.10.2025**
(21) Application number: 23714210.4
(22) Date of filing: 23.03.2023
(51) Int. Cl.: F02C 7/232, F02C 9/26

(54) **FIRING APPARATUS AND FIRING METHOD FOR HIGH REACTIVE FUEL GASES**
VORRICHTUNG UND VERFAHREN ZUM ZÜNDEN VON HOCHREAKTIVEN BRENNGASEN
APPAREIL D'ALLUMAGE ET PROCÉDÉ D'ALLUMAGE DE GAZ COMBUSTIBLES À RÉACTION ÉLEVÉE

(30) Priority: 24.03.2022 IT 202200005783; 14.06.2022 IT 202200012593
(43) Date of publication of application: 05.02.2025
(73) Proprietor: NUOVO PIGNONE TECNOLOGIE - S.R.L., 50127 Florence (IT)
(72) Inventor: BOTARELLI, Claudio, 50127 Firenze (IT); CECCHERINI, Gianni, 50127 Firenze (IT); GAMBERI, Francesco, 50127 Firenze (IT); GUAZZELLI, Nicola, 50127 Firenze (IT); QUARTIERI, Eugenio, 50127 Firenze (IT)
(74) Representative: Novagraaf Group
(86) International application number: PCT/EP2023/025129
(87) International publication number: WO 2023/179911

(56) References cited:
- US-A1- 2020 116 086
- US-A1- 2020 141 321
- US-A1- 2021 388 773

## Description

### TECHNICAL FIELD

The present disclosure relates to a firing apparatus for starting and fueling a gas turbine by high reactive fuel gasses and a firing method for firing the gas turbine.

### BACKGROUND ART

As known, a gas turbine comprises a combustion chamber provided with nozzles for injecting the fuel gas to be burned. The fuel gas is intended to be burned inside the combustion chamber. Then, after the burning, the hot exhaust gases exit the combustion chamber to move an impeller attached to a shaft, thus providing mechanical work to be used for any necessity.

The fuel is delivered to the gas turbine through delivery lines. Apparatuses equipped with valves are arranged along the delivery line to control the amount of fuel supplied to the combustor and to shut off the fuel delivery when the gas turbine engine has to be shut down. The firing apparatuses also comprise shutoff valves, to interrupt fuel delivery towards the combustor section.

The firing apparatuses are usually implemented for controlling the fuel delivery to the gas turbines, providing fuel metering valves, to real-time measure the amount of fuel delivered to the combustor section of the gas turbine, based upon a turbine controller input signal. In particular, the firing apparatuses are intended to prevent any excess fuel to the startup phase of the gas turbine. In fact, an excess of fuel supplied at the firing phase can overheat the gas turbine itself and cause dangers to the rotary machine, which would increase the maintenance costs as well as the downtown times. US 2020/116086 A1 discloses a method of starting a gas turbine. The gas turbine is fired using only fuel from an auxiliary line whilst a main line is sealed with a sealing device. Afterwards, the main line is opened.

In addition to the above, one of the critical aspects of the known firing apparatuses is that they usually have a remarkable number of parts, thus increasing the probability of failures and the average maintenance costs.

Another drawback of the known firing apparatuses is that they are often cumbersome, in view of the large number of parts they are made of. Modern gas turbines are usually compact and in general, the market requires power units as compact as possible, in order to better arrange such kinds of components in larger energy production systems. Hence, one design trend is saving space, and a compact and reliable component would be welcome in the market.

### SUMMARY

The present invention is defined in the accompanying claims. In one aspect, the subject matter disclosed herein is directed to a firing apparatus to control the firing of a gas turbine. The firing apparatus mainly comprises a shutoff module that allows a selective passage of the fuel gas from a fuel source, and an adjustment module, connected between the shutoff module and the outlet connected to a nozzle manifold. The adjustment module can assume a first operating state, in which the adjustment module allows the flow of the fuel gas to the nozzle manifold, and a second operating state, in which the adjustment module allows fueling the gas turbine over all conditions, in particular over start-up, operation and shutdown conditions.

In another aspect, the adjustment module comprises at least one control valve, such as a metering valve, which is connected between the shutoff module and the nozzle manifold. The control valve is arranged to adjust the fuel gas flow when the adjustment module is in the second operating state. Also, the adjustment module comprises a firing valve assembly, capable of selectively opening the fuel gas flow to be delivered to the nozzle manifold when the adjustment module is in the first operating state. The firing valve assembly has a nominal flow rate lower than that of the control valve.

In another aspect, the firing valve assembly is series connected to the control valve. The control valve is opened when the adjustment module is in the first operating state. Also, the firing valve assembly may parallel connected to the control valve, and the control valve is closed when the adjustment module is in the first operating state.

A further aspect of the present disclosure is drawn to a firing valve assembly having a nominal flow rate lower than that of the control valve. Particularly, the firing valve assembly comprises an orifice member sized in such a way to prevent the passage of an amount of fuel that can cause excess fueling.

In another aspect, disclosed herein is a firing valve assembly comprising a metering valve, which may be series-connected or parallel connected to the orifice member. Also, the firing valve assembly may comprise a valve seal, which may be series-connected or parallel connected to the orifice member.

In another aspect, disclosed herein is that the firing valve assembly may comprise a shutoff valve, which may be series connected upstream the control valve. Also, a metering valve may be parallel connected to the shutoff valve.

In another aspect, disclosed herein is that the shutoff module comprises two shutoff valves and a vent valve.

In one aspect, the subject matter disclosed herein is directed to a gas turbine having a firing apparatus, one or more burners, for burning fuel, and one or more nozzle manifold, each one having one or more nozzles for injecting fuel into a respective burner.

In a further aspect, the subject application disclosed herein concerns the firing valve assembly comprises a valve seal connected between the first shutoff valve and the second shutoff valve of the shutoff module, or down-stream the shutoff module, and an orifice member, connected between valve seal and least one of the nozzle manifold.

In one aspect, the subject matter disclosed herein also concerns a shutoff valve connected between the valve seal and the first shutoff valve and the second shutoff valve of the shutoff module, wherein the shutoff valve is configured to be opened when the adjustment stage assumes the first operating state, and to be closed when the adjustment stage assumes the second operating state.

In one aspect, the subject matter disclosed herein is directed to a method of firing a gas turbine comprising a firing apparatus. The method comprises the steps of opening a shutoff module, to allow the passage of the fuel gas coming from a source connected to the firing apparatus, firing the gas turbine by controlling the fuel flow to be delivered to at least one nozzle of a burner, or to at least one nozzle manifold, by enabling a firing valve assembly of an adjustment module of the firing apparatus, and disabling or adjusting the control valve of the adjustment module, so as to fire the at least one nozzle or the at least one nozzle manifold of the gas turbine. Also, the method comprises the step of fueling the gas turbine over start-up, operation, and shutdown conditions by adjusting the control valve to supply the fuel gas to the gas turbine (1), after the firing step is completed.

### BRIEF DESCRIPTION OF THE DRAWINGS

A more complete appreciation of the disclosed embodiments of the invention and many of the attendant advantages thereof will be readily obtained as the same becomes better understood by reference to the following detailed description when considered in connection with the accompanying drawings, wherein:
Fig. 1 illustrates a schematic of an apparatus for firing a gas turbine, according to a first embodiment;
Fig. 2 illustrates a schematic of an apparatus for firing a gas turbine, according to a second embodiment;
Fig. 3 illustrates a schematic of an apparatus for firing a gas turbine, according to a third embodiment;
Fig. 4 illustrates a schematic of an apparatus for firing a gas turbine, according to a fourth embodiment;
Fig. 5 illustrates a schematic of an apparatus for firing a gas turbine, according to a fifth embodiment;
Fig. 6 illustrates a schematic of an apparatus for firing a gas turbine, according to a sixth embodiment;
Fig. 7 illustrates a schematic of an apparatus for firing a gas turbine, according to a seventh embodiment; and
Fig. 8 illustrates a flow chart of methods for firing a gas turbine according to the present invention.

### DETAILED DESCRIPTION OF EMBODIMENTS

When the gas turbines have to be fired the fuel to be delivered to the burners has to be properly controlled and an excess of such fuel has to be avoided. There are devices and apparatuses for controlling the firing phase of the gas turbines. According to one aspect, the present subject matter is directed to a firing apparatus capable of assuming different operating states, to allow the firing of the gas turbine, and when the firing step is completed, the supply of the fuel to drive the gas turbine.

In the various figures, similar parts will be indicated by the same reference numbers.

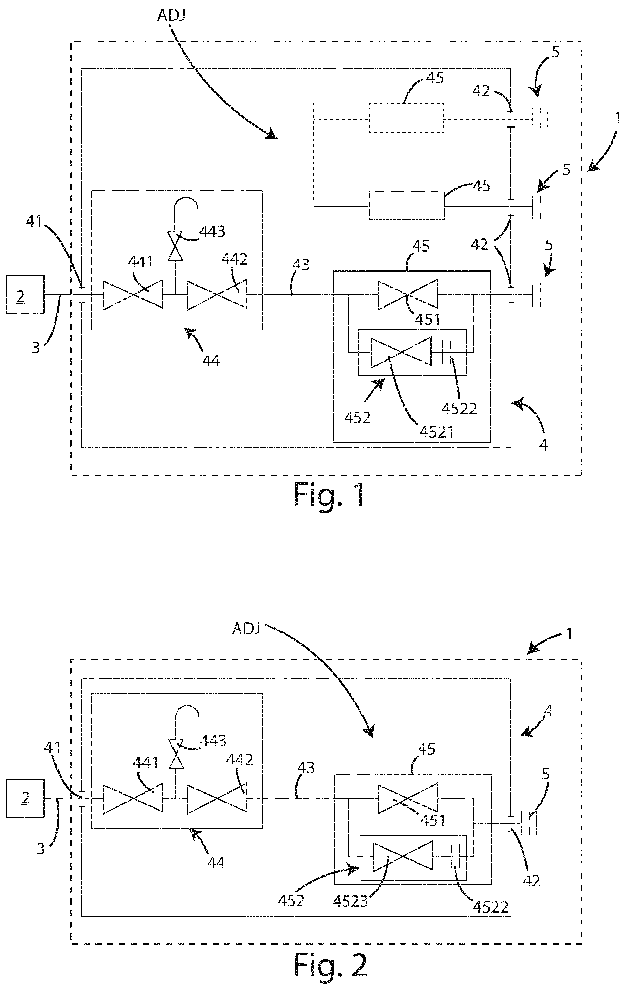

Referring now to the drawings, Fig. 1 shows schematically a gas turbine 1, connected to a fuel source 2 through a delivery line 3. The gas turbine 1 is schematically illustrated as a dashed line box and not all the main parts of the gas turbine 1 are represented in the mentioned Figure.

The fuel source 2 may be a fuel gas tank or a gas supply stream line or any other source of gaseous fuel.

The gas turbine 1 mainly comprises a nozzle manifold 5, having a plurality of nozzles for injecting the fuel to be burned inside the combustion chamber (not shown in the figure) of the gas turbine 1, and a firing apparatus 4, fluidly connected to the delivery line 3 and to the nozzle manifold 5. The firing apparatus 4 is adapted to control the amount of fuel injected to the burners of a gas turbine 1 during the firing sequence regardless of the fuel composition and supply pressure. It is intended that the fuel can be of any type.

The nozzles of the nozzle manifold 5 depend on the number, size and geometry of the burners. The amount of fuel, taken from the fuel source 2 and properly controlled in terms of the amount by the firing apparatus 4 according to the operation phase of the gas turbine 1, is distributed and injected by each nozzle of the nozzle manifold 5.

The firing apparatus 4 has an inlet 41, fluidly connected to the delivery line 3, and an outlet 42, fluidly connected to the nozzle manifold 5. The firing apparatus 4 comprises a shutoff module 44, for allowing the passage of the fuel from the fuel source 2, and at least one adjustment module 45, connected to the shutoff module 44 through a fuel line 43.

The firing apparatus 4 shows a plurality of adjustment modules 45, all but one indicated in dashed line. The adjustment modules 45 form an adjustment stage ADJ of the firing apparatus 4. In the figure only one adjustment module 45 is illustrated and in the following disclosed in detail. The adjustment module 45 is arranged for controlling the fuel to be delivered to the burners of the gas turbine 1 through the nozzle manifold 5 during the firing sequence, in order not to overload the burners with fuel, which can cause the gas turbine 1 to overheat. In the present embodiment, the shutoff module 44 comprises a first shutoff valve 441, fluidly connected to the inlet 41, a second shutoff valve 442, fluidly connected between the first shutoff valve 441 and the adjustment module 45, and a vent valve 443, interposed between the first 441 and the second 442 shutoff valves, and the ambient. As it can be appreciated, the first 441 and the second 442 shutoff valves are series-connected.

Continuing referring to Fig. 1, the adjustment module 45 comprises the main metering valve 451, which is a control valve, connected between the shutoff module 44 and the nozzle manifolds 5, and a firing valve assembly 452, having a capacity lower than that of the main metering valve 451. The firing valve assembly 452 is parallel connected to the main metering valve 451. In the present embodiment, the firing valve assembly 452 comprises a solenoid valve, to automatically control a valve seal 4521, which is thus electrically controlled, and an orifice member 4522 that has a passage sized in such a way to prevent the passage of an amount of fuel that can cause an excess fueling. In this way, the firing valve assembly 452 has a flow rate lower than that of the main metering valve 451.

The valve seal 4521 can be series-connected or parallel connected to the orifice member 4522.

In general, a plurality of nozzle manifolds 5 are connected and thus are supplied. Also, in some embodiments, a plurality of adjustment modules 45 are provided, each one of them fluidly connected to a relevant nozzle manifold 5 through the outlet 42, as schematically shown in Fig. 1.

A plurality of nozzle manifolds 5 are connected and thus are supplied. Also, in some embodiments, a plurality of adjustment modules 45 are provided, each of them fluidly connected to a nozzle manifold 5 through the outlet 42.

In some embodiments, the main metering valve 451 can be provided for each nozzle manifold 5. In this case, the flow rate of fuel gas reaching the main metering valve 451, or in general by the respective control valve, can be individually controlled and adjusted, while the firing valve assembly 452 allows the passage of the fuel gas only for the firing phase.

More specifically, the adjustment module 45 (and in general the adjustment stage ADJ) can operate according to a first operating state, wherein the adjustment module 45 allows a limited amount of fuel to reach the nozzle manifold, to fire the gas turbine 1, and a second operating state, wherein adjustment module 45 allows the passage of the fuel for supplying the gas turbine over a regime condition operation, namely in the so-called all condition, and in particular over start-up, operation, and shutdown conditions.

The fuel source 2 can be, in general, a tank or gas line, fluidly connected to the delivery line 4. The fuel, which is usually gas, is, as it is well known, delivered with nominal pressure.

The firing apparatus 4 operates as follows.

When the gas turbine 1 is shut down, the shutoff module 44 is closed, so as to prevent the fuel coming from the fuel source 2 to reach the burners of the gas turbine 1.

Specifically, the first 441 and the second 442 shutoff valves are closed, while the vent valve 443 is opened, so that, a double block and bleed (DDB) system solution for positive isolation took place.

At the starting of the gas turbine 1, instead, the shutoff module 44 allows the fuel coming from the fuel source 2 through the delivery line 3, to pass through and reach the adjustment stage ADJ, and specifically the adjustment module 45. In particular, the first 441 and the second 442 shutoff valve open, while the vent valve 443 closes, to prevent the fuel (i.e., the gas) do be dispersed in the ambient. In this state (first operating state of the adjusting module 451), the adjusting module 45 allows a reduced and appropriate amount of fuel to reach the nozzle manifold 5, so as to allow the burners to start up the gas turbine 1.

Specifically, for firing the gas turbine 1, the main metering valve 451 is closed, and, at the same time, the firing valve assembly 452 is opened, so that the amount of fuel capable of passing through the valve seal 4521 reaches the nozzle manifold 5 passing through the orifice member 4522, which actually limits the gas flow reaching the nozzles. The valve seal 4521 is opened and thus it may be appropriately electrically controlled. Also, the orifice member 4522 has a flow rate properly designed to allow the right and controlled flow of fuel to reach the nozzle manifold 5, to structurally prevent any fuel overload of the burners.

When the gas turbine 1 has started, the main metering valve 451 opens and the control valve 452 possibly closes, so that all the fuel can pass through the main metering valve 451 (second operating state of the adjusting module 451). In any case, in other embodiments, the control valve 452 can remain open, without affecting the operation of the gas turbine 1.

In general, the metering valves 451 do not perfectly close the fuel passage. A small leakage is possible. Then, the flow meter of the control valve 452, and in particular, in the embodiment that is disclosed, of the orifice member 4522, is designed (hence reduced) to take into consideration the above-mentioned leakage.

Fig. 2 illustrates a second embodiment of the firing apparatus 4, which differs with respect to the one of Fig. 1 in that the adjustment module 45 comprises the main metering valve 451 as the control valve, and a firing valve assembly 452 connected parallel to the main metering valve 451, wherein the firing valve assembly 452 comprises an additional metering valve 4523, which is a control valve, series connected to the orifice member 4522. The additional metering valve 4523 has a flow rate lower than that of the main metering valve 451.

The operation of the firing apparatus 4 is analogous to that of the first embodiment, however, when the gas turbine 1 is started, after that the shutoff module 44 allows the fuel coming from the fuel source 2 through the delivery line 3 to pass and reach the adjustment module 45, the main metering valve 451 is closed, while the additional metering valve 4523, which also, in this case, acts as a control valve, of the firing valve assembly opens, allowing the fuel to reach the nozzle manifold 5 (first operating state of the adjusting module 451). As mentioned above, the flow rate or capability of the additional metering valve 4523 in series with the orifice member 4522 is lower than that of the main metering valve 451 and, therefore the fuel to the nozzle manifold 5 is controlled in terms of quantity.

Also, in this case, the capability of the orifice member 4522 can be designed to take into account the leakage of the main metering valve 451 when the latter is closed.

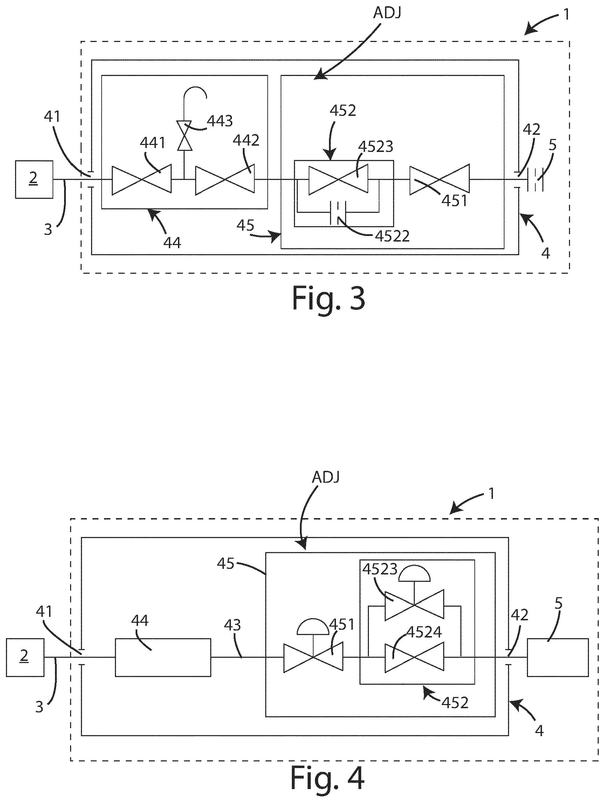

Referring now to Fig. 3, a third embodiment of a firing apparatus 4 is illustrated, which, likewise the previous embodiments already disclosed, has a shutoff module 44, analogous to that of the embodiment shown in Fig. 1, thus having the first 441 and the second 442 shutoff valve, and a vent valve 443, operating and connected in the same way.

The firing apparatus 4 according to the third embodiment comprises also the adjustment module 45 having the main metering valve 451 as a control valve and the firing valve assembly 452, which comprises comprised of the additional metering valve 4523, upstream series connected to the metering valve 451. The additional metering valve 4523 is designed to adjust the supply of a fluid (namely the fuel) to the burners of the gas turbine 1, and it is operated automatically.

In addition, the firing valve assembly 452 of the adjustment module 45 comprises the orifice member 4522, parallel connected to the additional metering valve 4523, so as to bypass it, which has a passage sized in such a way to prevent the passage of an amount of fuel that can cause an excess fueling. To fire the gas turbine 1, as in the previous embodiments, the shutoff module 44 allows the fuel flowing through the fuel line 43 to reach the adjustment module 45. Then, the main metering valve 451 opens, and the additional metering valve 4523 remains closed so that the fuel coming from the source 2 passing through the adjustment module 45 and reaching the nozzle manifold 5 is controlled or limited in terms of quantity by the orifice member 4522.

After firing the burners, the additional metering valve 4523 opens, and the fuel flow reaches the nozzle manifold 5, and then the burners, is eventually adjusted by the main metering valve 451. Hence, the adjusted metering valve 4523 operates just as a bypass of the orifice member 4522.

It is noted that in case of the additional metering valve 4523 doesn't open, e.g. due to a fault, the orifice member 4522, which is a passive and not an active member, prevents the over-fueling of the burners, limiting the amount of fuel passing through itself.

In the embodiments of Figs. 2 and 3, the firing apparatus 4 of any one of claims 2-4, can include the firing valve assembly 452 comprising a shutoff valve 4524.

Referring now to Fig. 4, it is shown a fourth embodiment of a firing apparatus 4, which, in general, is similar to that of the previous embodiments. In this case, the adjustment module 45 still comprises the main metering valve 451 and the firing valve assembly 452 that is series connected to the main metering valve 451. The firing valve assembly 452 comprises a shutoff valve 4524, and an additional metering valve 4523, parallel connected to the shutoff valve 4524 of the firing valve assembly 452. The upstream connected metering valve 451 is also suitable to control the pressure upstream the firing valve assembly 454.

As to the shutoff module 44, it has the same structure as the other embodiments, thus comprising two shutoff valves and a vent valve.

During the firing operations (first operating state of the adjusting module 451), the metering valve 451 is opened while the shutoff valve 4524 of the firing valve assembly 452 is closed. At the same time, the additional metering valve 4523 of the firing valve assembly 452 is opened and allows the passage of fuel gas for the firing phase, controlling the amount of fuel gas reaching the nozzle manifold 5.

After the firing operation is completed, the gas turbine 1 can start operating. Then the shutoff valve 4524 opens, allowing the passage of fuel gas from the metering valve 451to allow the fuel coming from the source 2 to reach the nozzle manifold 5. At the same time, the additional metering valve 4523 of the firing valve assembly 452 can remain closed or opened, without affecting the operation of gas turbine.

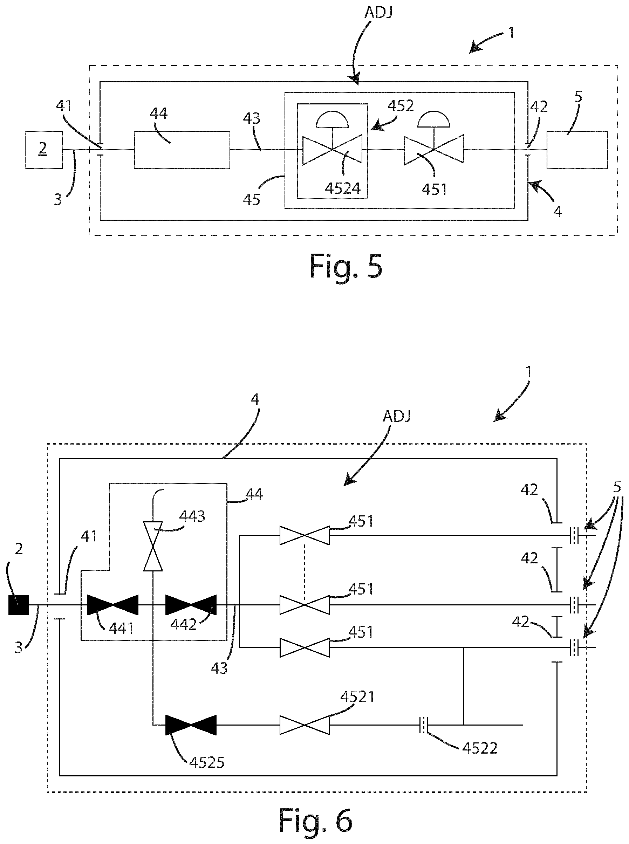

Referring now to Fig. 5, a fifth embodiment of the firing apparatus 4 is shown where, in particular, the shutoff module 44 is analogous to that of the previews embodiments. Specifically, the firing apparatus 45 comprises the main metering valve 451, having the same function as the previews embodiments, and the firing valve assembly 452 comprises a pressure control valve 4524, connected upstream the main metering valve 451, interposed between the shutoff module 44 and the main metering valve 451, which is a control valve. As it can be seen, this fifth embodiment is similar to the fourth embodiment shown in Fig. 4.

At the firing phase of the gas turbine 1, the main metering valve 451 remains open, so as to control the flow rate of the fuel gas. After the firing phase, the pressure control valve 4524 checks for higher pressure, or it can even be completely open. The adjustment of the fuel to be delivered to the nozzle manifold 5 is controlled also by the pressure control valve 4524. In other words, the pressure control valve 4524 checks the pressure upstream of the main metering valve 451, which, as mentioned above, controls the flow rate of the fuel gas firing line. The pressure is low enough to allow for proper adjustment with the main metering valve 451.

At the end of the firing phase of the gas turbine 1, the pressure control valve 4524 opens, allowing the fuel coming from the source 2 to pass through and be adjusted by the main metering valve 451.

Fig. 6 illustrates a sixth embodiment of the firing apparatus 4, where the shutoff module 44 comprises the first shutoff valve 441, connected to the inlet 41, the second shutoff valve 442, connected between the first shutoff valve 441 and the fuel line 43. The adjustment stage ADJ comprises a plurality of metering valves 451, each one connected between the fuel line 43 (and therefore downstream the shutoff module 44), and a respective nozzle manifold 5.

Also the adjustment stage ADJ comprises the firing valve assembly 452, having a shutoff valve 4525, connected between the first 441 and the second 442 shutoff valves of the shutoff module 44, an automatically control a valve seal 4521 and an orifice member 4522, connected between the automatically control a valve seal 4521 and directly to a respective nozzle manifold 5 or to one of the nozzle manifolds 5 to which one of the main metering valves 451 is connected to.

Also in this case, when the gas turbine 1 is shut down, the shutoff module 44 is closed and no fuel from the fuel source 2 reaches the burners of the gas turbine 1. In this case the first 441 and the second 442 shutoff valves are closed, while the vent valve 443 is opened. The shutoff valve 4525 of the firing valve assembly 452 is closed too, as well as the metering valves 451.

Then, at the start of the gas turbine 1, instead, the shutoff module 44 allows the fuel coming from the fuel source 2 through the delivery line 3, to pass through and reach the adjustment stage ADJ. Specifically, in the first operating state the first shutoff valve 441 is opened, the second shutoff valve 442 is closes, so that no fuel reaches the main metering valves 451, and the shutoff valve 4525 of the adjustment stage ADJ is opened, so that the fuel passes through the valve seal 4521, reaching the nozzle manifold 5, passing through the orifice member 4522, which, as in the other embodiments, limits the gas flow reaching the nozzles. Also in this case, the valve seal 4521 is opened and thus it can be electrically controlled.

As for the other embodiments, the orifice member 4522 has a flow rate properly designed to allow the right and controlled flow of fuel to reach the nozzle manifold 5, to structurally prevent any fuel overload of the burners.

In the second operating stage, all the metering valves 451 are opened and the second shutoff valve 442 of the shutoff module 44 is opened, so that the fuel can pass through the main metering valves 451. The control valve 452 can remain open or closed, without affecting the operation of the gas turbine 1. In other words, in the second operating stage, when the gas turbine 1 is normally fueled and the firing step is fulfilled, the shutoff valve 4525 of the adjustment stage ADJ can remain opened or closed.

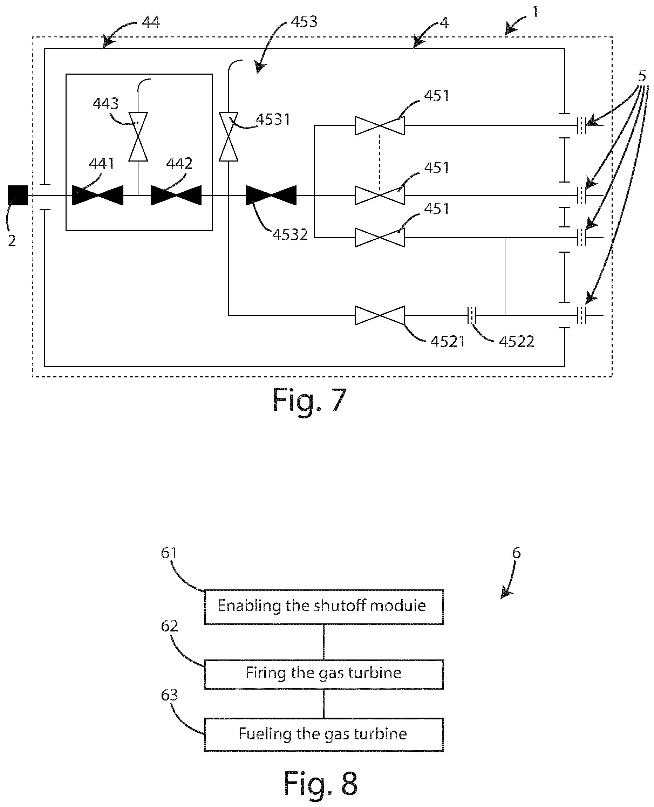

Referring now to Fig. 7, it is shown a seventh embodiment of a firing apparatus 4, where the shutoff module 44 always comprises a first 441 and a second 442 shutoff valve, and vent valve 443, in the usual double block and bleed connection. The adjustment stage ADJ comprises a safety stage 453, having a vent valve 4531 and a shutoff valve 4532. The shutoff valve 4532 is connected downstream the shutoff module 44 and upstream the main metering valves 451. The firing valve assembly 452 comprises an automatically control a valve seal 4521, connected downstream the shutoff module 44 and in general to the node the vent valve 4531 is connected to, and the orifice member 4522, connected between the automatically control a valve seal 4521 and directly to a respective nozzle manifold 5 or to one of the nozzle manifolds 5 to which one of the main metering valves 451 is connected to.

The adjustment stage ADJ comprises also the safety stage 453, having a vent valve 4531 and a shutoff valve 4532. When the gas turbine 1 is shut down, the shutoff module 44 is closed. Thus, both the first 441 and the second 442 shutoff valves are closed, while the vent valve 443 is opened. Referring to the safety stage 453, the shutoff valve 4532 is also closed and the vent valve 4531 is opened.

In the first operating state of the adjustment stage ADJ, after that the first 441 and the second 442 shutoff valves are opened, while the vent valve 443 is closed, the fuel passes through the valve seal 4521, reaching the nozzle manifold 5, passing through the orifice member 4522, which limits the fuel flow.

After the firing of the gas turbine 1, namely once the flame into the gas burner is detected, the shutoff valve 4532 of the safety stage 453 is opened and the vent valve 4531 is closed, so that the fuel can reach the nozzle manifolds 5 through the main metering valves 451.

It is possible also to foresee a vent valve (not shown in the figures) downstream each metering valve 451, to close only when the gas turbine 2 is actually fed.

Fig. 8 illustrates a method 6 of firing the gas turbine 1, through the firing apparatus 4 according to the present invention. The firing method 6 comprises the steps of enabling 61 a shutoff module 44, to allow the passage of the fuel gas coming from a source 2 connected to the firing apparatus 4. Then the firing stage takes place, by controlling the fuel flow to be delivered to the nozzle manifold 5 by enabling the firing valve assembly 452 of the adjustment module 45 of the firing apparatus 4. At the same time, the control valve 451 is adjusted. After the firing stage is completed, the gas turbine 1 is fueled for all the operating conditions, namely over start up, operation and shutdown conditions by enabling (step 63) the adjustment module 45 by enabling the control valve 451, which, being a metering valve, allows the gas flow to pass through and supply the fuel gas to the gas turbine 1. The fueling step starts after that the firing step 62 is completed.

An advantage of the firing apparatus of the present invention is that it has simplified hardware, which entails improvement of reliability.

Another advantage of the firing apparatus of the present invention is that it is also tolerant to multiple fuel gas compositions.

An additional advantage of the firing apparatus of the present invention is that there is no need to perform the sealing of the main line, after flame detection.

Reference has been made in detail to embodiments of the invention, one or more examples of which are illustrated in the drawings. Each example is provided by way of explanation of the disclosure, not limitation of the disclosure. Reference throughout the specification to "one embodiment" or "an embodiment" or "some embodiments" means that the particular feature, structure or characteristic described in connection with an embodiment is included in at least one embodiment of the subject matter disclosed. Thus, the appearance of the phrase "in one embodiment" or "in an embodiment" or "in some embodiments" in various places throughout the specification is not necessarily referring to the same embodiment(s). Further, the particular features, structures or characteristics may be combined in any suitable manner in one or more embodiments.

When elements of various embodiments are introduced, the articles "a", "an", "the", and "said" are intended to mean that there are one or more of the elements. The terms "comprising", "including", and "having" are intended to be inclusive and mean that there may be additional elements other than the listed elements.

## Claims

1. A firing apparatus (4) to control the firing of a gas turbine (1), comprising:
an inlet (41), connectable to a fuel gas source (2);
an outlet (42), for supplying a controlled amount of fuel gas to at least one nozzle of a burner or to at least one nozzle manifold (5);
a shutoff module (44), for selectively allowing the passage of the fuel gas from the fuel source (2); and
at least one adjustment module (45),
wherein the adjustment module (45) is configured to assume:
a first operating state, in which the adjustment module (45) allows the flow of the fuel gas to fire the at least one nozzle of a burner or to the at least one nozzle manifold (5) of the gas turbine (1); and
a second operating state, in which the adjustment module (45) allows to fuel the gas turbine (1) over start-up, operation, and shutdown conditions
**characterized in that** the adjustment module (45) is connected between the shutoff module (44), through a fuel line (43) and the outlet (42).

2. The firing apparatus of claim 1, wherein the adjustment module (45) comprises:
at least one control valve (451), connected between the shutoff module (44) and the at least one nozzle of a burner or the least one nozzle manifold (5), wherein the control valve (451) is arranged to adjust the fuel gas flow when the adjustment module (45) is in the second operating state; and
a firing valve assembly (452), capable of selectively opening the fuel gas flow to be delivered to at least one nozzle of a burner, or to the at least nozzle manifold (5) when the adjustment module (45) is in the first operating state.

3. The firing apparatus of claim 2, wherein the firing valve assembly (452) has a nominal flow rate lower than that of the control valve (451).

4. The firing apparatus of claim 2, wherein the at least one control valve (451) is a metering valve.

5. The firing apparatus of claim 2,
wherein the firing valve assembly (452) is series connected to the control valve (451), and
wherein the control valve (451) is opened when the adjustment module (45) is in the first operating state.

6. The firing apparatus of claim 2,
wherein the firing valve assembly (452) is parallel connected to the control valve (451), and
wherein the control valve (451) is closed when the adjustment module (45) is in the first operating state.

7. The firing apparatus of claim 1, wherein the firing valve assembly (452) comprises an orifice member (4522) sized in such a way to prevent the passage of an amount of fuel that can cause an excess fueling.

8. The firing apparatus of claim 7,
wherein the firing valve assembly (452) comprises a metering valve, (4523) and
wherein the metering valve (4523) is series-connected or parallel connected to the orifice member (4522).

9. The firing apparatus of claim 7,
wherein the firing valve assembly (452) comprises a valve seal (4521), and
wherein the valve seal (4521) is series-connected or parallel connected to the orifice member (4522).

10. The firing apparatus of claim 2, wherein the firing valve assembly (452) comprises a shutoff valve (4524).

11. The firing apparatus of claim 10, wherein the shutoff valve (4524) is series-connected upstream the control valve (451).

12. The firing apparatus of claim 10,
wherein the firing valve assembly (452) comprises a metering valve (4523) parallel connected to the shutoff valve (4524), and
wherein the firing valve assembly (452) is series-connected downstream the main metering valve (451).

13. The firing apparatus of claim 1, wherein the shutoff module (44) comprises:
a first shutoff valve (441), fluidly connected to the inlet (41);
a second shutoff valve (442), fluidly connected between the first shutoff valve (441) and the adjustment module (45); and
a vent valve (443), interposed between the first and the second shutoff valves (441,442) and the ambient.

14. The firing apparatus of claim 1, wherein the outlet (42) is connected to a plurality of nozzles or a plurality of nozzle manifolds (5).

15. Gas turbine (1) comprising
a firing apparatus (4) according to claim 1 connected to a fuel source (2),
one or more burners, for burning fuel, and
one or more nozzle manifold (5), each one having one or more nozzles for injecting fuel into a respective burner.

16. Method of firing the gas turbine (1) of claim 15, the method comprising the steps of:
enabling (61) the shutoff module (44), to allow the passage of the fuel gas coming from the source (2) connected to the firing apparatus (4);
firing (62) the gas turbine (1) by controlling the fuel flow to be delivered to at least one nozzle of a burner, or to at least one nozzle manifold (5), by enabling a firing valve assembly (452) of the adjustment module (45) of the firing apparatus (4), and disabling or adjusting the control valve (451) of the adjustment module (45), so as to fire the at least one nozzle or the at least one nozzle manifold (45) of the gas turbine (1); and
fueling (63) the gas turbine (1) over start-up, operation, and shutdown conditions by enabling the adjustment module (45) adjusting the control valve (451) to supply the fuel gas to the gas turbine (1), after the firing step is completed.

17. Method of claim 16, wherein the firing step (62) comprises the sub-steps of:
allowing the passage of fuel gas through the firing valve assembly (452) by opening a metering valve (4523) or a valve seal (4521), and allowing the passage of the fuel gas through an orifice member (4522), to control the fuel flow to be delivered to the at least one nozzle of a burner or to the at least one nozzle manifold (5).

18. Method of claim 16, wherein the firing step (62) comprises the sub-steps of:
allowing the passage of fuel gas through the firing valve assembly (452) by opening a pressure control valve (4524), to control the pressure of the fuel gas, and
controlling the flow rate of the fuel gas by adjusting the control valve (451),
to control the fuel flow to be delivered to the at least one nozzle of a burner or to the at least one nozzle manifold (5).

## Patentansprüche

1. Zündvorrichtung (4), um das Zünden einer Gasturbine (1) zu steuern, umfassend:
einen Einlass (41), der mit einer Brenngasquelle (2) verbindbar ist;
einen Auslass (42) zum Zuführen einer kontrollierten Menge von Brenngas zu mindestens einer Düse eines Brenners oder zu mindestens einem Düsenverteiler (5);
ein Absperrmodul (44), zum selektiven Ermöglichen des Durchgangs des Brenngases von der Brennstoffquelle (2); und
mindestens ein Einstellmodul (45),
wobei das Einstellmodul (45) konfiguriert ist, um anzunehmen:
einen ersten Betriebszustand, in dem das Einstellmodul (45) den Fluss des Brenngases, um die mindestens eine Düse eines Brenners zu zünden, oder zu dem mindestens einen Düsenverteiler (5) der Gasturbine (1) ermöglicht; und
einen zweiten Betriebszustand, in dem das Einstellmodul (45) ermöglicht, die Gasturbine (1) über Anfahr-, Betriebs- und Abschaltbedingungen zu betanken, **dadurch gekennzeichnet, dass** das Einstellmodul (45) zwischen dem Absperrmodul (44) über eine Kraftstoffleitung (43) und den Auslass (42) verbunden ist.

2. Zündvorrichtung nach Anspruch 1, wobei das Einstellmodul (45) umfasst:
mindestens ein Steuerventil (451), das zwischen dem Absperrmodul (44) und der mindestens einen Düse eines Brenners oder dem mindestens einen Düsenverteiler (5) verbunden ist, wobei das Steuerventil (451) eingerichtet ist, um den Brenngasfluss einzustellen, wenn sich das Einstellmodul (45) in dem zweiten Betriebszustand befindet; und
eine Zündventilanordnung (452), die in der Lage ist, den Brenngasfluss selektiv zu öffnen, um ihn an mindestens eine Düse eines Brenners oder an den mindestens einen Düsenverteiler (5) abzugeben, wenn sich das Einstellmodul (45) in dem ersten Betriebszustand befindet.

3. Zündvorrichtung nach Anspruch 2, wobei die Zündventilanordnung (452) eine niedrigere Nenndurchflussrate als die des Steuerventils (451) aufweist.

4. Zündvorrichtung nach Anspruch 2, wobei das mindestens eine Steuerventil (451) ein Dosierventil ist.

5. Zündvorrichtung nach Anspruch 2,
wobei die Zündventilanordnung (452) in Reihe mit dem Steuerventil (451) verbunden ist, und
wobei das Steuerventil (451) geöffnet ist, wenn sich das Einstellmodul (45) in dem ersten Betriebszustand befindet.

6. Zündvorrichtung nach Anspruch 2,
wobei die Zündventilanordnung (452) parallel zu dem Steuerventil (451) verbunden ist, und
wobei das Steuerventil (451) geschlossen ist, wenn sich das Einstellmodul (45) in dem ersten Betriebszustand befindet.

7. Zündvorrichtung nach Anspruch 1, wobei die Zündventilanordnung (452) ein Drosselelement (4522) umfasst, das auf solche Weise bemessen ist, um den Durchgang einer Menge von Brennstoff zu verhindern, die zu einer übermäßigen Brennstoffzufuhr führen kann.

8. Zündvorrichtung nach Anspruch 7,
wobei die Zündventilanordnung (452) ein Dosierventil (4523) umfasst und
wobei das Dosierventil (4523) in Reihe oder parallel zu dem Drosselelement (4522) verbunden ist.

9. Zündvorrichtung nach Anspruch 7,
wobei die Zündventilanordnung (452) eine Ventildichtung (4521) umfasst, und
wobei die Ventildichtung (4521) in Reihe oder parallel zu dem Drosselelement (4522) verbunden ist.

10. Zündvorrichtung nach Anspruch 2, wobei die Zündventilanordnung (452) ein Absperrventil (4524) umfasst.

11. Zündvorrichtung nach Anspruch 10, wobei das Absperrventil (4524) in Reihe stromaufwärts des Steuerventils (451) verbunden ist.

12. Zündvorrichtung nach Anspruch 10,
wobei die Zündventilanordnung (452) ein Dosierventil (4523) umfasst, das parallel zu dem Absperrventil (4524) verbunden ist, und
wobei die Zündventilanordnung (452) in Reihe stromabwärts des Hauptdosierventils (451) verbunden ist.

13. Zündvorrichtung nach Anspruch 1, wobei das Absperrmodul (44) umfasst:
ein erstes Absperrventil (441), das mit dem Einlass (41) fluidisch verbunden ist;
ein zweites Absperrventil (442), das zwischen dem ersten Absperrventil (441) und dem Einstellmodul (45) fluidisch verbunden ist; und
ein Entlüftungsventil (443), das zwischen dem ersten und dem zweiten Absperrventil (441,442) und der Umgebung eingefügt ist.

14. Zündvorrichtung nach Anspruch 1, wobei der Auslass (42) mit einer Vielzahl von Düsen oder einer Vielzahl von Düsenverteilern (5) verbunden ist.

15. Gasturbine (1), umfassend
eine Zündvorrichtung (4) nach Anspruch 1, die mit einer Brennstoffquelle (2) verbunden ist,
einen oder mehrere Brenner zum Verbrennen von Brennstoff und
einen oder mehrere Düsenverteiler (5), von denen jeder eine oder mehrere Düsen zum Einspritzen von Brennstoff in einen jeweiligen Brenner aufweist.

16. Verfahren zum Zünden der Gasturbine (1) nach Anspruch 15, das Verfahren umfassend die Schritte:
Aktivieren (61) des Absperrmoduls (44), um den Durchgang des Brenngases zu ermöglichen, das von der Quelle (2) kommt, das mit der Zündvorrichtung (4) verbunden ist;
Zünden (62) der Gasturbine (1) durch das Steuern des Brennstoffflusses, der an mindestens eine Düse eines Brenners oder an mindestens einen Düsenverteiler (5) abgegeben werden soll, durch das Aktivieren einer Zündventilanordnung (452) des Einstellmoduls (45) der Zündvorrichtung (4) und das Deaktivieren oder Einstellen des Steuerventils (451) des Einstellmoduls (45), um die mindestens eine Düse oder den mindestens einen Düsenverteiler (45) der Gasturbine (1) zu zünden; und
Betanken (63) der Gasturbine (1) über Anfahr-, Betriebs- und Abschaltbedingungen durch das Aktivieren des Einstellmoduls (45), das das Steuerventil (451) einstellt, um der Gasturbine (1) Brenngas zuzuführen, nachdem der Zündschritt abgeschlossen ist.

17. Verfahren nach Anspruch 16, wobei der Zündschritt (62) die Unterschritte umfasst:
Ermöglichen des Durchgangs von Brenngas durch die Zündventilanordnung (452) durch das Öffnen eines Dosierventils (4523) oder einer Ventildichtung (4521) und das Ermöglichen des Durchgangs des Brenngases durch ein Drosselelement (4522), um den Brennstofffluss zu steuern, der an die mindestens eine Düse eines Brenners oder an den mindestens einen Düsenverteiler (5) abgegeben werden soll.

18. Verfahren nach Anspruch 16, wobei der Zündschritt (62) die Unterschritte umfasst:
Ermöglichen des Durchgangs von Brenngas durch die Zündventilanordnung (452) durch das Öffnen eines Drucksteuerventils (4524), um den Druck des Brenngases zu steuern, und
Steuern der Flussrate des Brenngases durch das Einstellen des Steuerventils (451),
um den Brennstofffluss zu steuern, um an die mindestens eine Düse eines Brenners oder an den mindestens einen Düsenverteiler (5) abgegeben zu werden.

## Revendications

1. Appareil d'allumage (4) destiné à réguler l'allumage d'une turbine à gaz (1), comprenant :
une entrée (41), pouvant être raccordée à une source de gaz combustible (2) ;
une sortie (42), permettant d'introduire une quantité régulée de gaz combustible dans au moins une buse d'un brûleur ou dans au moins un collecteur de buses (5) ;
un module d'arrêt (44), permettant sélectivement le passage du gaz combustible à partir de la source de combustible (2) ; et
au moins un module d'ajustement (45),
dans lequel le module d'ajustement (45) est configuré pour adopter :
un premier état de fonctionnement, dans lequel le module d'ajustement (45) permet au flux de gaz combustible d'allumer l'au moins une buse d'un brûleur ou l'au moins un collecteur de buses (5) de la turbine à gaz (1) ; et
un second état de fonctionnement, dans lequel le module d'ajustement (45) permet d'alimenter la turbine à gaz (1) en conditions de démarrage, de fonctionnement et d'arrêt **caractérisé en ce que** le module d'ajustement (45) est raccordé entre le module d'arrêt (44), par l'intermédiaire d'une conduite de combustible (43) et la sortie (42).

2. Appareil d'allumage selon la revendication 1, dans lequel le module d'ajustement (45) comprend :
au moins une soupape de régulation (451), raccordée entre le module d'arrêt (44) et l'au moins une buse d'un brûleur ou l'au moins un collecteur de buses (5), dans lequel la soupape de régulation (451) est agencée pour ajuster le flux de gaz combustible lorsque le module d'ajustement (45) est dans le second état de fonctionnement ; et
un ensemble de soupape d'allumage (452), capable d'ouvrir sélectivement le flux de gaz combustible à distribuer à au moins une buse d'un brûleur, ou à l'au moins un collecteur de buses (5) lorsque le module d'ajustement (45) est dans le premier état de fonctionnement.

3. Appareil d'allumage selon la revendication 2, dans lequel l'ensemble de soupape d'allumage (452) a un débit nominal inférieur à celui de la soupape de régulation (451).

4. Appareil d'allumage selon la revendication 2, dans lequel l'au moins une soupape de régulation (451) est une soupape doseuse.

5. Appareil d'allumage selon la revendication 2,
dans lequel l'ensemble de soupape d'allumage (452) est raccordé en série à la soupape de régulation (451), et
dans lequel la soupape de régulation (451) est ouverte lorsque le module d'ajustement (45) est dans le premier état de fonctionnement.

6. Appareil d'allumage selon la revendication 2,
dans lequel l'ensemble de soupape d'allumage (452) est raccordé en parallèle à la soupape de régulation (451), et
dans lequel la soupape de régulation (451) est fermée lorsque le module d'ajustement (45) est dans le premier état de fonctionnement.

7. Appareil d'allumage selon la revendication 1, dans lequel l'ensemble de soupape d'allumage (452) comprend un élément d'orifice (4522) dimensionné de telle sorte qu'il empêche le passage d'une quantité de combustible qui peut provoquer un excès d'approvisionnement en combustible.

8. Appareil d'allumage selon la revendication 7,
dans lequel l'ensemble de soupape d'allumage (452) comprend une soupape doseuse (4523) et
dans lequel la soupape doseuse (4523) est raccordée en série ou en parallèle à l'élément d'orifice (4522).

9. Appareil d'allumage selon la revendication 7,
dans lequel l'ensemble de soupape d'allumage (452) comprend un joint de soupape (4521), et
dans lequel le joint de soupape (4521) est raccordé en série ou en parallèle à l'élément d'orifice (4522).

10. Appareil d'allumage selon la revendication 2, dans lequel l'ensemble de soupape d'allumage (452) comprend une soupape d'arrêt (4524).

11. Appareil d'allumage selon la revendication 10, dans lequel la soupape d'arrêt (4524) est raccordée en série en amont de la soupape de régulation (451).

12. Appareil d'allumage selon la revendication 10,
dans lequel l'ensemble de soupape d'allumage (452) comprend une soupape doseuse (4523) raccordée en parallèle à la soupape d'arrêt (4524), et
dans lequel l'ensemble de soupape d'allumage (452) est raccordé en série en aval de la soupape doseuse principale (451).

13. Appareil d'allumage selon la revendication 1, dans lequel le module d'arrêt (44) comprend :
une première soupape d'arrêt (441), raccordée fluidiquement à l'entrée (41) ;
une seconde soupape d'arrêt (442) raccordée fluidiquement entre la première soupape d'arrêt (441) et le module d'ajustement (45) ; et
une soupape de mise à l'air libre (443), interposée entre les première et seconde soupapes d'arrêt (441,442) et le milieu ambiant.

14. Appareil d'allumage selon la revendication 1, dans lequel la sortie (42) est raccordée à une pluralité de buses ou à une pluralité de collecteurs de buses (5).

15. Turbine à gaz (1) comprenant
un appareil d'allumage (4) selon la revendication 1 raccordé à une source de combustible (2),
un ou plusieurs brûleurs, pour brûler le combustible, et
un ou plusieurs collecteurs de buses (5), chacun ayant une ou plusieurs buses pour injecter du combustible dans un brûleur respectif.

16. Procédé d'allumage de la turbine à gaz (1) selon la revendication 15, le procédé comprenant les étapes consistant à :
activer (61) le module d'arrêt (44), pour permettre le passage du gaz combustible provenant de la source (2) raccordée à l'appareil d'allumage (4) ;
allumer (62) la turbine à gaz (1) en régulant le flux de combustible à distribuer à au moins une buse d'un brûleur, ou à au moins un collecteur de buses (5), en activant un ensemble de soupape d'allumage (452) du module d'ajustement (45) de l'appareil d'allumage (4), et en désactivant ou en ajustant la soupape de régulation (451) du module d'ajustement (45), de manière à allumer l'au moins une buse ou l'au moins un collecteur de buses (45) de la turbine à gaz (1) ; et
approvisionner en combustible (63) la turbine à gaz (1) en conditions de démarrage, de fonctionnement et d'arrêt en permettant au module d'ajustement (45) d'ajuster la soupape de régulation (451) pour introduire le gaz combustible dans la turbine à gaz (1), une fois l'étape d'allumage terminée.

17. Procédé selon la revendication 16, dans lequel l'étape d'allumage (62) comprend les sous-étapes consistant à :
permettre le passage du gaz combustible à travers l'ensemble de soupape d'allumage (452) en ouvrant une soupape doseuse (4523) ou un joint de soupape (4521), et permettre le passage du gaz combustible à travers un élément d'orifice (4522), afin de réguler le flux de combustible à distribuer à l'au moins une buse d'un brûleur ou à l'au moins un collecteur de buses (5).

18. Procédé selon la revendication 16, dans lequel l'étape d'allumage (62) comprend les sous-étapes consistant à :
permettre le passage du gaz combustible à travers l'ensemble de soupape d'allumage (452) en ouvrant une soupape de régulation de pression (4524), afin de réguler la pression du gaz combustible, et
réguler le débit du gaz combustible en ajustant la soupape de régulation (451),
pour réguler le débit de combustible à distribuer à l'au moins une buse d'un brûleur ou à l'au moins un collecteur de buses (5).
